(19) Europäisches Patentamt
European Patent Office
Office européen des brevets

(11) **EP 2 417 497 B1**

(12) **EUROPEAN PATENT SPECIFICATION**

(45) Date of publication and mention
of the grant of the patent:
**10.01.2018 Bulletin 2018/02**

(51) Int Cl.:
***G05B 13/04*** *(2006.01)*   ***D21G 9/00*** *(2006.01)*

(21) Application number: **10761227.7**

(22) Date of filing: **31.03.2010**

(86) International application number:
**PCT/FI2010/050254**

(87) International publication number:
**WO 2010/116030 (14.10.2010 Gazette 2010/41)**

(54) **MODELLING OF A PROPERTY OF PAPER, PAPERBOARD OR BOARD**

MODELLIERUNG EINER EIGENSCHAFT VON PAPIER, PAPPE ODER KARTON

MODÉLISATION D'UNE PROPRIÉTÉ DE PAPIER OU DE CARTON

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **07.04.2009 FI 20095381**

(43) Date of publication of application:
**15.02.2012 Bulletin 2012/07**

(73) Proprietor: **Valmet Automation Oy
02150 Espoo (FI)**

(72) Inventor: **SARÉN, Matti-Paavo
FIN-87250 Kajaani (FI)**

(74) Representative: **Kolster Oy Ab
(Salmisaarenaukio 1)
P.O. Box 204
00181 Helsinki (FI)**

(56) References cited:
**EP-B1- 1 023 648       EP-B1- 1 023 648
WO-A1-98/32916          WO-A1-2007/122289
WO-A1-2007/122289       US-A- 4 318 180
US-A- 4 318 180         US-A- 5 087 823
US-A- 5 087 823         US-A- 5 638 284
US-A1- 2005 145 357     US-B1- 6 493 601
US-B1- 7 082 348        US-B1- 7 082 348**

• **'Papermakers Conference Recycling
Symposium and Process Control Electrical and
Information Conference, 1-4 March 1999', vol. 1,
TAPPI PRESS, ISBN 0-89852-734-1 deel RUDD J
B: 'Virtual online analyzer (VOA)-solutions for
paper machine property measurements', pages
323 - 328, XP008167521**

**Description**

FIELD

The invention relates to modelling a property of an end product, such as paper, paperboard or board, and particularly to the use of fractionation of a raw material, such as fibre-water suspension, which is used for manufacturing the end product, in modelling a given paper-technical property of the end product, and to controlling said property by use of a corresponding model.

BACKGROUND

Generally, the aim of papermaking is to manufacture paper which corresponds to the quality desired by a customer. Paper quality may be expressed with several different parameters, such as tensile strength, basis weight and surface properties of the paper. The above-mentioned paper-technical properties of paper depend on several factors, including the quality of the paper pulp used for papermaking, for example. Paper pulp is used in papermaking by feeding pulp onto the wire of a paper machine and by drying the pulp into paper. Paper pulp may be manufactured by, for example, chemically or mechanically separating cellulose from wood. Pulp may also be manufactured of recycled fibre, such as newsprint, by means of a recycled fibre process. Further, it is obvious that the paper quality depends, to a great extent, on different operations of the paper machine producing the paper.

Paper pulp is thus an intermediate product used in manufacturing paper, paperboard or board, containing fibre suspension, such as cellulose, minerals and chemicals. However, most of the paper pulp is water, which disperses the fibre and makes it pliable.

Since paper pulp may be produced in several different ways and there are several different processes affecting its manufacture, it is obvious that paper pulps produced in different ways may have very different properties. Therefore, a paper-technical property of paper, paperboard or board produced as an end product may vary a lot, depending on the properties of the paper pulp used. It is thus extremely challenging to assess the value of a paper-technical property of an end product if the quality of the paper pulp cannot be determined accurately. There have been attempts to solve this problem by keeping the quality of paper pulp stable and, in this way, to obtain paper, paperboard or board of given quality. Documents WO 98/32916, EP 1 023 648, US 7 082 348, US 5 087 823, US 4 318 180, and WO 2007/122289 provide some background information.

A problem in the arrangement described above is that keeping the properties of paper pulp stable is challenging, and when a customer wishes to have paper, paperboard or board of given quality, searching for properties of paper pulp providing the desired quality is work that takes time and resources. Thus, in order to produce an end product of the desired type and quality, it is important to provide a solution by means of which this is possible without excessively wasting resources.

BRIEF DESCRIPTION

An object of the invention is thus to provide a method and an apparatus implementing the method in such a way that the above problems can be solved. The object of the invention is achieved with a method and an arrangement characterized by what is stated in the independent claims.

The invention thus relates to the methods disclosed in independent claims 1 and 8.

The invention thus relates to the apparatuses disclosed in independent claims 7 and 14.

Preferred embodiments of the invention are disclosed in the dependent claims.

Advantages of the method and the apparatus implementing the method according to the invention include, for instance, control of the end product in real time.

BRIEF DESCRIPTION OF THE FIGURES

The invention will now be described in greater detail in connection with preferred embodiments, referring to the attached drawings, of which:

Figure 1 shows the general structure of a paper machine;
Figure 2 shows the principle of generating a model;
Figure 3 shows the structure of a fractionator;
Figure 4 shows the principle of control;
Figure 5 shows a method of determining a property of an end product by means of a model; and
Figure 6 shows a method of controlling the quality of an end product by means of a model.

DESCRIPTION OF EMBODIMENTS

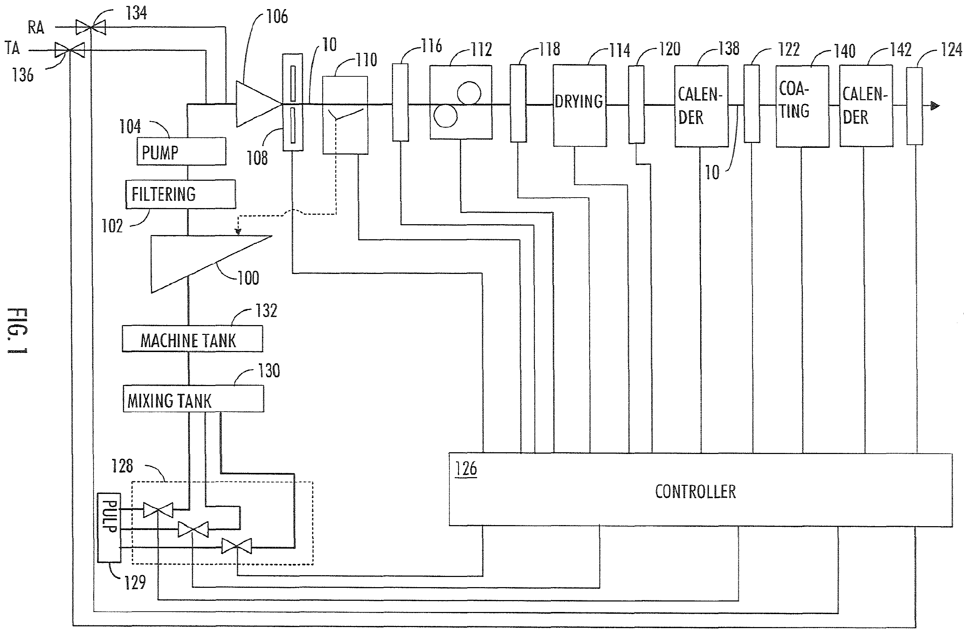

Figure 1 shows the principled structure of a paper machine. One or more pulps are fed into a paper machine via a wire well 100, which is usually preceded by a mixing tank 130 of pulp parts and a machine tank 132. Machine pulp is batched to short circulation, controlled by basis weight control or a grade change program, for example. The mixing tank 130 and the machine tank 132 may be replaced by a separate mixing reactor (not shown in Figure 1), and the batching of machine pulp is controlled by the feed of each pulp part separately by means of valves or another flow control member 128. In the wire well 100, water is mixed into the machine pulp in order to obtain a desired consistency for the short circulation. Water may be circulated in the paper machine in such a way that the water used for diluting paper pulp is obtained from a former 110 (broken line from the former 110 to the wire well 100). Purifying apparatuses 102 may be used to remove sand (vortex cleaners), air (air removal tank) and other coarse material (pressure screen) from the generated pulp, and pulp is pumped into a headbox 106 by means of a pump 104. Before the headbox 106, filling agent TA including, for instance, kaoline, calcium carbonate, talc, chalk, titanium oxide and infusorial earth etc. and/or retention agent RA including inorganic, natural organic or synthetic water-soluble organic polymers, may be added to the pulp, if required. The filling agent allows the formation, surface properties, opacity, brightness and printability to be improved and the manufacturing costs to be reduced. Retention agents RA, in turn, increase the retention of the fines and filling agents and simultaneously accelerate water removal in a manner known as such. Both the filling agents and the retention agents as well as the paper pulp and its chemistry affect the topography of the surface of the web and paper.

A headbox 106 is the first part of the starting part of the paper machine, having the task of feeding paper pulp onto the wire to form a web. The headbox 106 tends to generate turbulence when feeding paper pulp to form a web. By means of turbulence, the fibres of the paper pulp are formed into a web as uniformly as possible, and not merely in the direction of the wire. Before the feed, the pulp in the headbox 106 is intensely agitated in order for the fibre bundles to disintegrate. The agitation and the generation of turbulence may take place by means of a high rotation speed of a screen-type roll, as in a rectifier-roll headbox, or by means of a tapering flow channel, as in a hydraulic headbox. Before the headbox 106, there are usually components 129 affecting the pulp to be moved into the paper box. Such a component may be, for example, a refiner and/or a screen (not shown in Figure 1), with which the pulp to be moved into the headbox 106 is treated. The purpose of refiners is to treat the fibres in such a way, for example, that their surface structure would allow better bonding than before or that their mechanical properties would change along desired lines. By means of screens, pulp may be divided into different fractions which may be processed separately to obtain desired properties.

From the headbox 106, the pulp is fed via a slice 108 of the headbox to the former 110, which may be a fourdrinier wire, a gap former, a hybrid former or a cylindrical former. In the former 110, water is removed from a web 10, and in addition, ash, fines and fibres are removed to the short circulation. In the former 110, the pulp is fed onto the wire to form a web 10, and the web 10 is preliminarily dried and pressed in a press 112. In the press, the paper pulp moves between two felts, and while the paper is moving through the felts, water is removed from the paper pulp into the felts. There may also be more than two felts in one press part. The felts are cleaned in the felt circulation, whereby it is again ready to remove water from the paper pulp. The web 10 is actually dried in drying apparatuses 14, which may be of different types. The most common type is a cylinder drying method in which the web travels on the surface of large heated cylinders. Since the surface of the cylinder is warm, the water is evaporated from the web. The steam generated is collected off the cylinder to be used in other operations of the paper machine. Other drying forms include, for instance, through drying or infrared drying.

The paper machine, which refers, in the context of this application, to paper, paperboard and board machines as well as cellulose-manufacturing machines, may further comprise a pre-calender 138, a coating part 140 and/or a post-calender 142. However, there is not necessarily any coating part 140, whereby it is not necessary to have more than one calender 138, 142. In the coating part 140, coating slip may be applied onto the surface of the paper, which slip may contain kaoline, talc or carbonate, starch and/or latex. The use of coating slip usually decreases the roughness of the paper and increases the glossiness.

In the calender 138, 142, where the uncoated or coated paper web moves between rolls pressing with a desired force, the surface topography of the paper, such as roughness, may be changed. The calender 138, 142 may also affect the thickness and/or gloss of the paper. In the calender 138, 142, properties of the paper web may be changed by means of moistening of the web, the temperature and the nip loading between the rolls in such a way that the greater the pressing directed at the web, the smoother and glossier the paper. Moistening and rising the temperature further decrease the roughness and increase the glossiness.

Having been treated as desired, the paper may be rolled into a machine reel in a reel-up unit. In addition to this, it is obvious that the operation of a paper machine is known as such to a person skilled in the art, and thus it is not described in greater detail in this context.

Figure 1 also shows a control arrangement of a paper machine. Factors relating to the quality include the number of pulp parts and their proportion to each other, the amount of filling agent, the amount of retention agent, machine speed, the amount of wire water and the drying efficiency. A controller 126 may control the batching of the pulp parts by means of valves 128, the batching of the filling agent TA by means of a valve 136, the batching of the retention agent RA by means of a valve 134, control the size of the slice 108, control the machine speed, control the amount of wire water and the drying process in block 114. The controller 126 also utilizes measuring devices 116 to 120 to monitor the control measures, the quality and/or the grade change. At least one measuring part 116 to 124 may be used to measure the surface topography of the web 10. The controller 126 may also measure the properties of the web 10 in other parts (for example at the same points whre the control measures are taken).

The controller 126 may be regarded as a control arrangement based on automatic data processing of the paper machine or a part of it. The controller 126 may receive digital signals or convert the analogue signals it has received into digital ones. The controller 126 may comprise a microprocessor and memory and carry out the signal processing in accordance with an appropriate computer program. The principle of the controller 126 may be, for instance, a PID (Proportional-Integral-Derivative), MPC (Model Predictive Control) or GPC control (General Predictive Control).

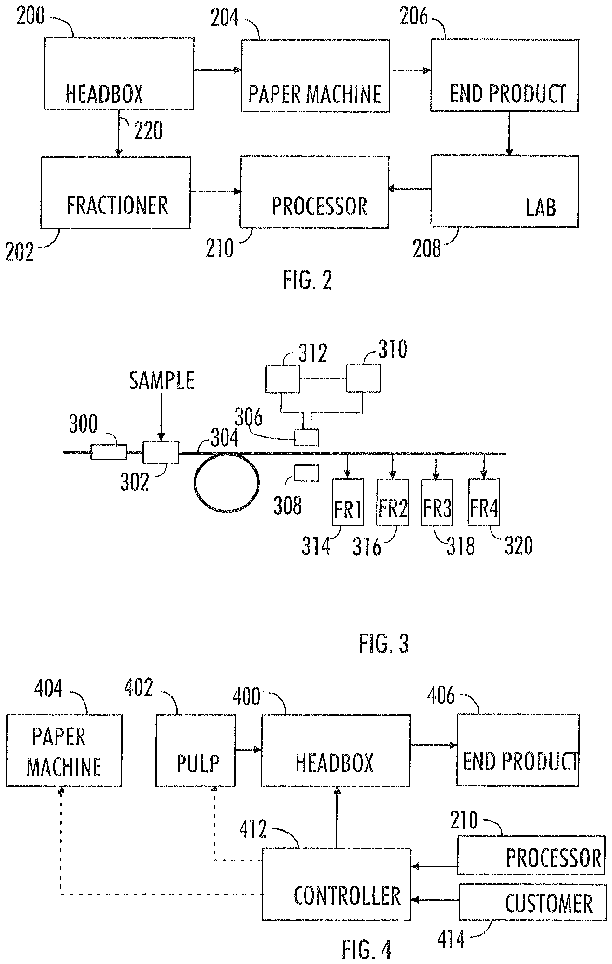

Figure 2 shows, in accordance with an embodiment of the invention, an arrangement implementing generation of a model. A sample 220 is taken from liquid fibre pulp which is to be conveyed into a headbox 200 or has proceeded into it and which is used for manufacturing an end product 206. The sample 220 may be taken to a fractionator 202, for example, where the sample 220 may be arranged in accordance with hydrodynamic flow resistance of the particles. At least one property is determined from the sample 220 with at least two particle sizes at a moment of time T1. In accordance with the embodiment, at least one property is determined from the end product 206 at a moment of time T2, which is later than the moment of time T1. Further, a model based at least on the determined at least one property of the end product 206 and at least one property of the sample 220 is generated. The model may be used for modelling the end product 206 or for controlling the manufacturing process of the end product 206.

The fractionator may be similar to the one shown in Figure 3, and its operation will be described next. The liquid fibre pulp sample may be fed via a valve 302 into a tube 304, where the pressure, flow and temperature of the water pushing the sample forwards is controlled by means of a regulator 300. The tube 304 carrying out the fractionation may be of an arbitrary length and thickness. The length of the tube may even be dozens or hundreds of metres, and the diameter of the tube may even be dozens of centimetres. Preferably, however, the diameter of the tube is as small as possible, even less than a millimetre. The tube 304 may be manufactured of polymer, such as plastic, metal etc.

When the sample is flowing in the tube 304, the particles of the solid matter of the sample become arranged according to the particle size in such a way that the greatest particles are collected in the front part of the sample, the smallest particles being collected in the rear part of the sample. Large particles thus flow more rapidly than small particles. The particles of the sample may be arranged in fractions according to the particle size, each of the fractions containing particles between the desired upper limit and the desired lower limit. In this way, in accordance with an embodiment, the particles of the sample are arranged according to the particle size, i.e. according to the hydrodynamic flow resistance of the particles. Parameters expressing properties of the fibres in the sample include, for example, the length of the fibre, the length distribution of the fibres, the number of fibre bundles, optical properties of the fibres, such as brightness, RI value (Residual Ink) or colour, width of the fibre, wall strength of the fibre, linear density, amount of fines, crimp of the fibre, external fibrillation of the fibre, electrical conductivity and permittivity of the fibres and sound velocity in the fibres.

If desired, fractions may be taken from the samples into sample receivers 314 to 320, and there may be N sample receivers, where N is a positive integer number and N is equal to or greater than 2. Each of the fractions in the sample receiver 314 to 320 may be measured in a laboratory, or the fractions may be measured in the same way as the sample flowing in the fractionating tube 304, using one or more measuring methods.

Thus, in accordance with an embodiment, at least one property of the sample is determined with at least two different particle sizes at a moment of time T1. In accordance with an embodiment, at least one property may be measured from the sample receiver 314 to 320 by performing measurements from at least two sample receivers 314 to 320. In accordance with an embodiment, at least one property may be measured from a sample in the fractionating tube by performing measurements from at least two points of the fractionating tube. Alternatively, at least one property may be determined from one point of the fractionating tube at two different moments of time, whereby at the latter moment of time, a group of particles of different sizes has moved to the measuring point of the fractionating tube. The measuring point of the fractionating tube may be a gate-like measuring point where the desired measurements to find out at least one property can be performed. The fractionating tube may be, for example, transparent. Further, different ways of determining at least one property may be combined in such a way, for example, that one property is measured directly from the fractionating tube, another property being measured from the sample receiver 314 to 320. Fractionation may be performed with either what is called a tube flow fractionator or with what is called a field flow fractionator. It is also feasible to implement the fractionation by using an ultrasound or movement field, such as in the cyclone principle.

Typically, the particle sizes separated by the fractionator are divided into very small batches. Consequently, there is a very large number of fractions with different particles sizes at the output of the fractionator. In accordance with an embodiment, that number of fractions for which at least one property is calculated is reduced. In other words, the dimension of the output data is reduced. Reduction may be such, for instance, that at least one property is calculated for only 30 fractions of the original exemplary 3 000 fractions. Any other reduction ratio is also feasible.

The at least one property of the sample may express consistency information as a function of the volume of the liquid fibre pulp having flown through the fractionating tube. Further, the at least one property of the sample may express how much fibre or filling agent there is in the liquid fibre pulp.

Thus, a fractionator is an apparatus dividing the pulp sample into continuous fractions with the principle of tube flow fractionation. The concentration and/or optical properties of these fractions may be measured by using an electrochemical, optical, electromagnetic or mechanical transmitter, such as a kajaaniRM3™ transmitter manufactured by Metso Automation. A kajaaniRM3 transmitter transmits light at a given wavelength towards an object to be examined, such as, in this case, towards a sample separated by a fractionator and having a given particle size. The ash content of the sample, for example, can be expressed by means of a kajaaniRM3 transmitter. Of course, other optical transmitters may also be used instead of a kajaaniRM3 transmitter. Further, in accordance with an embodiment, several different transmitters may be switched on simultaneously and used for determining at least one property of a sample.

In accordance with an embodiment, at least one optical property is determined from the sample with at least two different particle sizes. The optical property can be found out by using an optical transmitter, such as a kajaaniRM3 transmitter. With an optical transmitter, optical signals with a desired wave length may be transmitted towards an object to be examined. By means of the signals, at least one optical property can be found out, the property being, in accordance with an embodiment, at least one of the following: absorption of light, scattering of light and depolarization of light. Other optical properties, such as reflection of light, may also be utilized. Light refers here not only to visible light (wavelength of 400 nm to 700 nm) but also to other optical radiation. Thus, light refers to all optical radiation with a wavelength of 50 nm to 5 000 nm.

Absorption of light means "soaking" of light into an object to be examined, i.e., in this case, absorption of light into a sample with a given particle size. Scattering of light means that when arriving in the sample, light is scattered in several different directions. Scattering results from the refractive index of the particles and liquid in the liquid fibre pulp sample. Depolarization of light (birefringence) expresses how much the polarization plane of light turns. In this case, depolarization expresses how birefringent the sample pulp is. In other words, when the vibration frequency of light relative to the direction of propagation favours another type of polarization, for example vertical polarization, the molecules in the sample pulp may turn the polarization plane of the light when this type of light hits the sample pulp. The crystalline cellulose molecules in the fibres of the sample pulp are thus birefringent, so they can turn the polarization plane of the light. The more there are such molecules, the more the polarization plane turns. Therefore, depolarization of light expresses the amount of fibres, crystalline cellulose etc. in the sample pulp.

Each of these three optical properties, such as optical properties in general, is affected by the wavelength of the optical signal used. Therefore, in accordance with an embodiment, at least one optical property is determined by at least two wavelengths of the light used for determining the optical property. The wavelengths used may be arbitrarily selected. The wavelengths used may be, for example, a given wavelength of laser light and a given wavelength of LED light (LED = light emitting diode).

The at least one property of the sample, measured with at least two different particle sizes, may be, instead of an optical property, for instance capability of the sample to conduct electricity. Thus, the at least one property may also express the electrical conductivity of the liquid fibre pulp sample with a given particle size. Further, both an optical property and another property, such as electrical conductivity, may be measured from the sample, and both of these properties may be utilized.

Let us examine Figure 3 in more detail. For determining at least one optical property, the arrangement of Figure 3 comprises at least one processor with which changes in the optical signal can be examined when the signal meets the flowing sample for instance in the transparent fractionating tube. A source 308 of optical radiation may be arranged to generate optical signals at a given wavelength, and a processor may determine how the optical properties of light change when hitting the flowing sample. An optical signal means here electromagnetic radiation having a wavelength which has been selected arbitrarily.

The processor may be, for example, a camera 306. There may be one or more cameras 306. From the camera 306, the image or images may be transferred to an image processing unit 310, in which the image or images may be transferred to a display 312. The image may be displayed as, for example, a grey-shade image or as a colour image. The image processing unit 310 comprises a processor, memory and one or more computer programs required for executing the image processing. An image or images may also be transferred to the display 312 directly from the camera 306 without any processing that would be executed in an image processing unit 310. Each image may a still image or a video image. Each still image may represent one fraction, or an image showing one fraction may be selected from a group of images. A video image, in turn, may be a sequence of still images, showing shots from the starting end to the final end of the sample. Then, when one proceeds from the first image (the image of larger particles at the starting end of the sample) onwards image by image, the average size of the particles decreases. Further, the consistency of the fractions may be measured optically by utilizing attenuation of optical radiation and possibly also a change in the polarization.

The source 308 of optical power may be a LED, filament lamp, gas-discharge lamp, laser etc., and the source of optical power may illuminate the object in a pulsed manner or continuously. The camera 306, which may be, for example, a CCD camera (Charge Coupled Device) or a CMOS camera (Complementary Metal Oxide Semiconductor) takes an image or images of the liquid fibre pulp sample in the tube 304 either on the same side where the source 308 of optical power is or on the opposite side.

The at least one property may be determined on the basis of the spectrum of optical radiation reflected by each fraction. The particle colour, brightness etc. and thus the desired parameter to be measured can be determined from the spectrum.

The optical measurements of the particle properties may thus be performed for instance spectroscopically or by means of image analysis, and the measurements may be directed at the flowing sample or the sample receivers for fractions. The optical measurements may be, in accordance with an embodiment, absorption, reflection or scattering measurements which may utilize polarization of optical radiation.

In accordance with an embodiment, the at least one property of the sample may also be measured without using a fractionator. The principle is that at least one property is determined from two or more fractions of the liquid fibre pulp, which property may be, for example, an optical property or the capability of the sample to conduct electricity, as explained above. The determined at least one property may then be used for modelling the end product and controlling the process. Determination of the at least one property with at least two different fractions may take place from the measured signal instead of a fractionator.

Let us re-examine Figure 2. As described above, the liquid fibre pulp is moved from the headbox to other parts of a paper machine 204, such as onto the wire, to the drying mechanism and finally to be formed as the end product 206. The end product may be, for instance, paper, paperboard or board. In accordance with an embodiment, at least one property is determined from the end product 206 at a moment of time T2 which is later than the moment of time T1 in such a way that the time constants affecting the manufacturing process have been taken into account.

The moment of time T2 is dependant on the moment of time T1 in such a way that the moment of time T2 is the moment at which the liquid fibre pulp, from which fibre pulp a sample 220 has been taken and from which sample 220 at least one property has been determined, has moved from the sampling location of the sample 220 through the paper machine to be formed as the end product. In other words, the moment of time T2 is affected by the length of the paper machine and the speed of the paper machine to move the pulp. In accordance with an embodiment, T2 = T1 + (length of the paper machine divided by the travelling speed of the material).

The at least one property of the end product 206 may be a paper-technical property, such as the tensile strength, roughness of the surface, glossiness of the surface, basis weight, moisture, colour etc. The property may be determined from the end product, such as from a paper reel, paperboard or board by using, for example, a laboratory tool 208 or other measurement. This may be, for instance, a PaperLab measuring device.

The property may also be determined from the end product of a part of the paper machine 204, such as from the web, after a part of the paper machine 204 by utilizing measuring devices 116 to 120 in Figure 1.

When at least one property of the end product and at least one property of the liquid fibre pulp used for manufacturing the end product are known, this information may be utilized when constructing a model with which properties of the pulp at the current moment to generate a particular paper-technical property can be determined. In this way, in accordance with an embodiment, a model is generated which is based on at least the determined at least one property of the end product 206 and at least one property of the sample. In other words, a processor 210 may generate, on the basis of the determined at least one property of the end product and at least one property of the sample 220 with at least two particle sizes, a model with which at least one property of the end product is determined when at least one property of the liquid fibre pulp is known. Thus, the model may be used in soft sensor modelling. Soft sensor modelling means a method in which several pieces of information are processed together, producing computationally new information by means of this joint processing.

After this, in accordance with an embodiment, a new sample 220 is taken from the liquid fibre pulp used for manufacturing the end product 206, and the particles of the sample 220 are arranged according to the particle size, so that at least one property of the sample 220 can be determined from it with at least two different particle sizes at a moment of time T3 which is later than the moment of time T2. Next, at least one property of the end product 206 is determined on the basis of the generated model when at least one property of the sample 220 is known, at a moment of time T4 which is later than the moment of time T3.

The model may be constructed on the basis of data collected mathematically. The model may be based on statistics about properties of the end product and the paper pulp. Alternatively, the model may also be generated by using known methods, such as MLP (Multi-Layer-Perception), ICA (Independent Component Analysis) or the like.

Compiling a model $M$ is based on grouping the collected fraction-specific properties and utilizing them in making the model $M$. Of a variable group that may contain, for example, a given number of variables for each one of a given number of fractions, a model $M$ can be constructed for connecting a property of the paper pulp and a property of the end product with each other. A given number of variables may be five, for example, containing absorption $A_1$, reflection $S_1$ and depolarization $D_1$ of light at one wavelength of light, and absorption $A_2$, reflection $S_2$ of light at another wavelength of light. If the number of fractions for which the variables are calculated is, for example, 30 (after potential reduction), the number of total variables in generating the model $M$ is in this case 30 x 5 = 150 variables. At least one property e determined from the end product corresponds to this variable group $J$.

A plurality of values may be determined for each variable as a function of fractions, such as a change in depolarization as a function of the particle size (fraction) when using a given type of wavelength. A property (variable) to be determined from a liquid fibrous sample may be selected in such a way, for instance, that the aim is to find such a variable that values obtained from it as a function of fractions contain as little noise as possible. The selected variables may also be predetermined without the above-mentioned examination of the amount of noise.

In accordance with an embodiment, the model is linear. Thus, a linear model $M$ is constructed of the variable group, measured against at least one property e. This may be done in such a way, for example, that the variable e = $M$ · $J$, where · denotes the dot product between the model vector $M$ and the determined variable vector $J$. In accordance with the previous example where there are 30 fractions and 5 variables per fraction, the following equation can be formed for property e:

$$e = \sum_{i=1}^{30} A_{1,i} M_i + \sum_{i=1}^{30} D_{1,i} M_{i+30} + \sum_{i=1}^{30} S_{1,i} M_{i+60} + \sum_{i=1}^{30} A_{2,i} M_{i+90} + \sum_{i=1}^{30} S_{2,i} M_{i+120}, \quad (1)$$

where $M_i$ is the $i^{th}$ element of the model matrix.

In accordance with an embodiment, the model is generated in such a way that at least one constant term is added to it. The constant term $c$ may be added to the model in such a way, for example, that a constant c, i.e. e = $c$ + $M$ · $J$, is added to the equation of at least one property $e$ of the end product. The constant term allows the model to be easily calibrated. For instance, the location of the zero point can be found for the model by means of the constant term $c$. The model may be calibrated to, for example, a threshold value of the laboratory tool 208, such as to the tensile strength or tear strength.

In accordance with an embodiment, a model is generated on the basis of yet at least one piece of further information, such as the setting parameter of the paper or paperboard machine or a measured variable, such as the flow, temperature or pressure, optical parameters, such as the colour, brightness or floc formation of the pulp, consistency, turbidity, electrical conductivity, chemical or biological oxygen consumption, acidity or the like. Thus, at least one external piece of information may be added to the model in addition to the at least one property provided by the fractionator and the at least one property determined from the end product. This external piece of information may originate from, for example, an industrial data system or an industrial production system. In other words, the model may further contain at least one piece of information from an industrial data system. Thus, at least one scalar or spectral variable may be added to the model. The piece of information may express, for instance, the position of the nozzles in the headbox 200, information on the equipment in the paper machine 204, such as on the nip pressure, information on the fractionator 202, information on the laboratory tool 208, information on the air humidity, information on the consumption of steam etc.

Thus, the model may be used to predict properties which cannot be predicted otherwise before the end product is finished. In other words, on the basis of the model, the liquid fibre pulp in the headbox may be controlled to be as desired when the desired property of the end product is known. This will be explained by means of Figure 4.

A customer 414 may inform what kind of given property of an end product 406 the customer 414 wishes to have. A controller 412 may thus be arranged to receive information on at least one desired property of the end product 406. Further, the controller 412 may be arranged to acquire information on the model $M$ connecting at least one property of the end product 406 with at least one property of the liquid fibre pulp used in manufacturing the end product 406. In this context, acquiring information on the model may mean that the controller 412 obtains information on the model from the processor 210 executing the generation of the model, or that the controller itself determines the model $M$. In the latter case, the processor 210 is not required separately but it may be integrated in the controller 412, or the controller 412 itself may perform the generation of the model $M$.

In accordance with an embodiment, the controller 412 may control at least one property of liquid fibre pulp to be such that it produces at least one desired property of the end product 406 on the basis of the model $M$. On the basis of the model, for instance the blade gap of a refiner, energy or feed consistencies can be controlled. Screens can also be controlled to screen fibre pulps in a desired manner by means of the feed consistency or flows, for example. The purpose of these control measures is to standardize changes in the raw material or to control the paper pulp to be such that its properties are of the desired type. The liquid fibre pulp may be located in a headbox 400. The controller 412 may then be used to control the fibre pulp to be of a desired type. For example, the mass potential of the headbox pulp may be the object of the control. Controlling may mean that components 402 before the headbox, such as the refiner, screen and/or chemicals to be fed to the approach line of the headbox 400, are controlled in such a way that the liquid fibre pulp in the headbox 400 is of a desired type. This controlling may be based on the fact that with known distributions of the measured variable (variable vector) $J$, the production process is stable and energy-efficient or that the properties of the end product are of a desired type. Controlling may also be based on model-based optimization in which the intention is to keep the model predictions in predetermined functional windows. Controlling is based on adjusting measures taken at process stages, such as in refining, screening or chemicalization, which adjusting measures change the distributions of the measured variable *J.* Further, formation of headbox pulp, such as the recycled fibre process, may be controlled in such a way that the liquid fibre pulp in the headbox 400 is of a desired type. Control/management of the recycled fibre process may refer to controlling the amount of chemicals in the process, use of flotation cells, energy of dispersing or the like. In accordance with an embodiment, the model *M* is used for at least one of the following: management of the operation of the refiner, management of the operation of the screen and management of the recycled fibre process.

Further, parts of the paper machine 404 affecting the quality of paper pulp, such as the valves 128, the mixing tank 130 and the machine tank 132 of Figure 1, may be controlled with the controller 412 of Figure 4 on the basis of the model in order to obtain paper pulp of a desired type.

The model *M* may also be utilized in an online process where a process for forming an end product is controlled in real time. Thus, at least one property is calculated from the pulp in the headbox by means of a fractionator at repeated intervals or when desired, and changes in the pulp are responded to in real time by controlling the pulp to be of the desired type, for example in the above-mentioned ways.

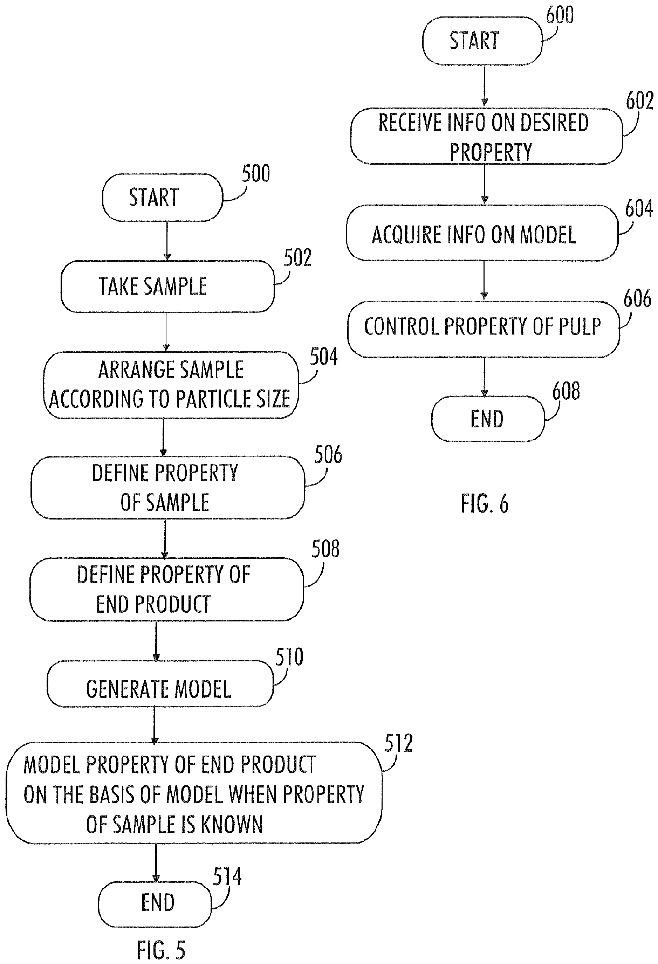

Figure 5 shows a method of modelling at least one property of paper, paperboard or board which is an end product. The method starts at point 500. At point 502, a sample is taken from liquid fibre pulp used for manufacturing the end product. At point 504, the particles of the sample are arranged according to the particle size. At point 506, at least one property of the sample is determined with at least two different particle sizes at a moment of time T1. At point 508, at least one property is determined from the end product at a moment of time T2 which is later than the moment of time T1. At point 510, a model is generated which is based on at least one property of the end product and at least one property of the sample. At a moment of time T3 which is later than the moment of time T2, at least one property may be determined from a new sample taken from liquid fibre pulp. The liquid fibre pulp may be different from the liquid fibre pulp of the sample taken at the moment of time T1. At point 512, at least one property of the end product is modelled, at a moment of time T4 which is later than the moment of time T3, on the basis of the generated model when at least one property of the sample is known. The method ends at point 514.

Figure 6 shows a method of controlling the quality of paper, paperboard or board which is an end product. The method starts at point 600. At point 602, information is received on at least one desired property of the end product. At point 604, information is acquired on the model that connects at least one property of the end product with at least one property of the liquid fibre pulp used in manufacturing the end product. At point 606, at least one property of the liquid fibre pulp is controlled, on the basis of the model, to be such that it produces at least one desired property of the end product. The method ends at point 608.

It will be obvious to a person skilled in the art that as the technology advances, the basic idea of the invention may be implemented in a plurality of different ways. The invention and its embodiments are thus not restricted to the embodiments described above but may vary within the claims.

**Claims**

1. A method of modelling at least one property of paper, paperboard or board which is an end product in connection with use of a paper machine, the method comprising:

    taking a sample (220) from liquid fibre pulp used for manufacturing the end product (206), wherein the sample is taken from the liquid fibre pulp which is to be conveyed into a headbox of the paper machine or has proceeded into it;
    arranging the particles of the sample according to the particle size by use of a fractionator utilizing hydrodynamic flow resistance of particles;
    determining, at a moment of time T1, a distribution of at least one property of the sample (220) of the liquid fibre pulp as a function of at least two different particle sizes fractionated by the fractionator;
    determining, at a moment of time T2 which is later than the moment of time T1, at least one property of the end product (206);
    generating a model based on the determined at least one property of the end product (206) and the distribution of at least one property of the sample (220) of the liquid fibre pulp as a function of at least two different particle sizes, wherein the model connects the property of the end product received at the moment of time T2 to a distribution of the property of the sample of the liquid fibre pulp received at the moment of time T1;
    taking a sample (220) from the liquid fibre pulp used for manufacturing the end product (206);
    arranging the particles of the sample according to the particle size by use of the fractionator utilizing hydrodynamic flow resistance of particles;

determining, at a moment of time T3 which is later than the moment of time T2, a distribution of at least one property of the sample (220) of the liquid fibre pulp as a function of at least two different particle sizes fractionated by the fractionator; and

modelling, at a moment of time T4 which is later than the moment of time T3, the at least one property of the end product (206) on the basis of the generated model when the distribution of at least one property of the sample (220) at the moment of time T3 is known.

2. A method according to claim 1, **characterized by** determining at least one optical property of the sample (220) with at least two different particle sizes.

3. A method according to claim 2, **characterized by** the optical property being at least one of the following: absorption of light, scattering of light and depolarization of light.

4. A method according to any one of claims 2 to 3, **characterized by** determining the optical property at at least two wavelengths of the light used for determining the optical property.

5. A method according to any one of claims 1 to 4, **characterized by** generating the model on the basis of at least one piece of further information.

6. A method according to any one of claims 1 to 5, **characterized by** the model being linear.

7. An apparatus for modelling at least one property of paper, paperboard or board which is an end product in connection with use of a paper machine, wherein the apparatus is configured to take a sample (220) from liquid fibre pulp used for manufacturing the end product (206), wherein the means for taking a sample (220) is configured to take the sample from the liquid fibre pulp which is to be conveyed into a headbox of the paper machine or has proceeded into it; and the apparatus comprises:

a fractionator (202) for arranging the particles of the sample according to the particle size utilizing hydrodynamic flow resistance of particles;

means (210, 412) for determining, at a moment of time T1, a distribution of at least one property of the sample (220) of the liquid fibre pulp as a function of at least two different particle sizes fractionated by the fractionator (202), for determining, at a moment of time T2 which is later than the moment of time T1, at least one property of the end product (206), and for generating a model based on the determined at least one property of the end product (206) and the distribution of at least one property of the sample (220) of the liquid fibre pulp as a function of at least two different particle sizes, wherein the model connects the property of the end product received at the moment of time T2 to a distribution of the property of the sample of the liquid fibre pulp received at the moment of time T1; and

the apparatus is configured to take a sample (220) from the liquid fibre pulp used for manufacturing the end product (206);

the fractionator (202) is configured to arrange the particles of the sample according to the particle size utilizing hydrodynamic flow resistance of particles;

the means (210, 412) for determining are configured to determine, at a moment of time T3 which is later than the moment of time T2, a distribution of at least one property of the sample (220) of the liquid fibre pulp as a function of at least two different particle sizes fractionated by the fractionator, and model, at a moment of time T4 which is later than the moment of time T3, the at least one property of the end product (206) on the basis of the generated model when the distribution of at least one property of the sample (220) at the moment of time T3 is known.

8. A method of controlling the quality of paper, paperboard or board which is an end product in connection with use of a paper machine; comprising the steps of receiving information on at least one property of the end product (406); and acquiring information on a model which has been generated on the basis of the following:

a distribution of at least one property of liquid fibre pulp used for manufacturing the end product as a function of at least two different particle sizes, wherein a fractionator utilizing hydrodynamic flow resistance of particles is used in dividing the liquid fibre pulp to the at least two different particle sizes, wherein the at least one property is determined from the liquid fibre pulp which is to be conveyed into a headbox of the paper machine or has proceeded into it; and

at least one property determined from the end product (406),

wherein the model connects the at least one property of the end product (406) to the distribution of the at least one property of the sample of the liquid fibre pulp used in manufacturing the end product (406); and

controlling, on the basis of the model, the at least one property of the liquid fibre pulp, which is used for manufacturing the end product, to be such that it produces at least one desired property of the end product (406), wherein controlling comprises controlling components before a headbox of the paper machine such that the distribution of the at least one property of the liquid fibre pulp in the headbox as a function of different particle sizes is such that it produces the at least one desired property of the end product.

9. A method according to claim 8, **characterized by** controlling at least one optical property of liquid fibre pulp by means of the model.

10. A method according to claim 9, **characterized by** the optical property being at least one of the following: absorption of light, scattering of light and depolarization of light.

11. A method according to claim 9 or 10 **characterized in that** the optical property may be expressed at at least two wavelengths of the light used for determining the optical property.

12. A method according to any one of claims 8 to 11 **characterized by** controlling at least one of the following: the operation of a refiner, the operation of a screen and a recycled fibre process.

13. A method according to any one of claims 8 to 12, **characterized by** controlling at least one property of the liquid fibre pulp in real time.

14. An apparatus for controlling the quality of paper, paperboard or board which is an end product in connection with use of a paper machine, wherein the apparatus comprises a controller (412) configured to receive information on at least one property of the end product (406);

the controller (210, 412) is configured to acquire information on a model which has been generated on the basis of the following:

a distribution of at least one property of liquid fibre pulp as a function of at least two different particle sizes, wherein a fractionator utilizing hydrodynamic flow resistance of particles is used in dividing the liquid fibre pulp to the at least two different particle sizes, wherein the at least one property is determined from the liquid fibre pulp which is to be conveyed into a headbox of the paper machine or has proceeded into it; and

at least one property determined from the end product (406),

wherein the model connects the at least one property of the end product (406) to the distribution of the at least one property of the sample of the liquid fibre pulp used in manufacturing the end product (406); and

the controller (210, 412) is configured to control, on the basis of the model, the at least one property of the liquid fibre pulp, which is used for manufacturing the end product, to be such that it produces at least one desired property of the end product (406), wherein controlling comprises controlling components before a headbox of the paper machine such that the distribution of the at least one property of the liquid fibre pulp in the headbox as a function of different particle sizes is such that it produces the at least one desired property of the end product.

## Patentansprüche

1. Verfahren zum Modellieren mindestens einer Eigenschaft von Papier, Pappe oder Karton, die ein Endprodukt in Verbindung mit der Verwendung einer Papiermaschine sind, wobei das Verfahren umfasst:

Entnehmen einer Probe (220) aus einer flüssigen Faserpulpe, die zur Herstellung des Endprodukts (206) verwendet wird, wobei die Probe der flüssigen Faserpulpe entnommen wird, die in einen Stoffauflauf der Papiermaschine zu befördern ist oder in diesen gelangt ist;

Anordnen der Partikel der Probe nach der Partikelgröße durch die Verwendung eines Fraktionators unter Nutzung des hydrodynamischen Strömungswiderstands der Partikel;

Bestimmen, zu einem Zeitpunkt T1, einer Verteilung mindestens einer Eigenschaft der Probe (220) der flüssigen Faserpulpe als Funktion von mindestens zwei verschiedenen Partikelgrößen, die vom Fraktionator fraktioniert werden;

Bestimmen, zu einem Zeitpunkt T2, der später ist als der Zeitpunkt T1, mindestens einer Eigenschaft des Endprodukts (206);

Generieren eines Modells auf der Basis der bestimmten mindestens einen Eigenschaft des Endprodukts (206) und der Verteilung mindestens einer Eigenschaft der Probe (220) der flüssigen Faserpulpe als Funktion von mindestens zwei verschiedenen Partikelgrößen, wobei das Modell die Eigenschaft des Endprodukts, die zum Zeitpunkt T2 erhalten wird, mit einer Verteilung der Eigenschaft der Probe der flüssigen Faserpulpe, die zum Zeitpunkt T1 erhalten wird, verbindet;

Entnehmen einer Probe (220) aus der flüssigen Faserpulpe, die zur Herstellung des Endprodukts (206) verwendet wird;

Anordnen der Partikel der Probe nach der Partikelgröße durch die Verwendung des Fraktionators unter Nutzung des hydrodynamischen Strömungswiderstands der Partikel;

Bestimmen, zu einem Zeitpunkt T3, der später ist als der Zeitpunkt T2, einer Verteilung mindestens einer Eigenschaft der Probe (220) der flüssigen Faserpulpe als Funktion von mindestens zwei verschiedenen Partikelgrößen, die vom Fraktionator fraktioniert werden; und

Modellieren, zu einem Zeitpunkt T4, der später ist als der Zeitpunkt T3, der mindestens einen Eigenschaft des Endprodukts (206) auf der Basis des generierten Modells, wenn die Verteilung mindestens einer Eigenschaft der Probe (220) zum Zeitpunkt T3 bekannt ist.

2. Verfahren nach Anspruch 1, **gekennzeichnet durch** ein Bestimmen mindestens einer optischen Eigenschaft der Probe (220) mit mindestens zwei verschiedenen Partikelgrößen.

3. Verfahren nach Anspruch 2, **dadurch gekennzeichnet, dass** die optische Eigenschaft mindestens eine der Folgenden ist: Lichtabsorption, Lichtstreuung und Lichtdepolarisation.

4. Verfahren nach einem der Ansprüche 2 bis 3, **gekennzeichnet durch** ein Bestimmen der optischen Eigenschaft bei mindestens zwei Wellenlängen des Lichts, das zum Bestimmen der optischen Eigenschaft verwendet wird.

5. Verfahren nach einem der Ansprüche 1 bis 4, **gekennzeichnet durch** ein Generieren des Modells auf der Basis mindestens eines Elements weiterer Informationen.

6. Verfahren nach einem der Ansprüche 1 bis 5, **dadurch gekennzeichnet, dass** das Modell linear ist.

7. Vorrichtung zur Modellierung mindestens einer Eigenschaft von Papier, Pappe oder Karton, die ein Endprodukt in Verbindung mit der Verwendung einer Papiermaschine sind,

wobei die Vorrichtung ausgelegt ist, eine Probe (220) einer flüssigen Faserpulpe zu entnehmen, die zur Herstellung des Endprodukts (206) verwendet wird, wobei das Mittel zur Entnahme einer Probe (220) ausgelegt ist, die Probe der flüssigen Faserpulpe zu entnehmen, die in einen Stoffauflauf der Papiermaschine zu befördern ist oder in diesen gelangt ist; und wobei die Vorrichtung umfasst:

einen Fraktionator (202) zum Anordnen der Partikel der Probe nach der Partikelgröße unter Nutzung des hydrodynamischen Strömungswiderstands der Partikel;

Mittel (210, 412) zum Bestimmen, zu einem Zeitpunkt T1, einer Verteilung mindestens einer Eigenschaft der Probe (220) der flüssigen Faserpulpe als Funktion von mindestens zwei verschiedenen Partikelgrößen, die vom Fraktionator (202) fraktioniert werden, zum Bestimmen, zu einem Zeitpunkt T2, der später ist als der Zeitpunkt T1, mindestens einer Eigenschaft des Endprodukts (206), und zum Generieren eines Modells auf der Basis der bestimmten mindestens einen Eigenschaft des Endprodukts (206) und der Verteilung mindestens einer Eigenschaft der Probe (220) der flüssigen Faserpulpe als Funktion von mindestens zwei verschiedenen Partikelgrößen, wobei das Modell die Eigenschaft des Endprodukts, die zum Zeitpunkt T2 erhalten wird, mit einer Verteilung der Eigenschaft der Probe der flüssigen Faserpulpe, die zum Zeitpunkt T1 erhalten wird, verbindet; und

die Vorrichtung ausgelegt ist, eine Probe (220) der flüssigen Faserpulpe, die zur Herstellung des Endprodukts (206) verwendet wird, zu entnehmen;

der Fraktionator (202) ausgelegt ist, die Partikel der Probe nach der Partikelgröße unter Nutzung des hydrodynamischen Strömungswiderstands der Partikel anzuordnen;

die Mittel (210, 412) zum Bestimmen ausgelegt sind, zu einem Zeitpunkt T3, der später ist als der Zeitpunkt T2, eine Verteilung mindestens einer Eigenschaft der Probe (220) der flüssigen Faserpulpe als Funktion von mindestens zwei verschiedenen Partikelgrößen, die vom Fraktionator fraktioniert werden, zu bestimmen, und zu einem Zeitpunkt T4, der später ist als der Zeitpunkt T3, die mindestens einen Eigenschaft des Endprodukts (206) auf der Basis des generierten Modells, wenn die Verteilung mindestens einer Eigenschaft der Probe (220) zum Zeitpunkt T3 bekannt ist, zu modellieren.

8. Verfahren zum Steuern der Qualität von Papier, Pappe oder Karton, die ein Endprodukt in Verbindung mit der Verwendung einer Papiermaschine sind;
umfassend die Schritte:

Empfangen von Informationen über mindestens eine Eigenschaft des Endprodukts (406); und
Erfassen von Informationen über ein Modell, das auf der Basis der Folgenden generiert wurde:

einer Verteilung mindestens einer Eigenschaft flüssiger Faserpulpe, die zur Herstellung des Endprodukts verwendet wird, als Funktion von mindestens zwei verschiedenen Partikelgrößen, wobei ein Fraktionator unter Nutzung des hydrodynamischen Strömungswiderstands von Partikeln zum Teilen der flüssigen Faserpulpe in mindestens zwei verschiedene Partikelgrößen verwendet wird, wobei die mindestens eine Eigenschaft aus der flüssigen Faserpulpe bestimmt wird, die in einen Stoffauflauf der Papiermaschine zu befördern ist oder in diesen gelangt ist; und
mindestens einer Eigenschaft, die aus dem Endprodukt (406) bestimmt wird;
wobei das Modell die mindestens eine Eigenschaft des Endprodukts (406) mit der Verteilung der mindestens einen Eigenschaft der Probe der flüssigen Faserpulpe, die zur Herstellung des Endprodukts (406) verwendet wird, verbindet; und
Steuern, auf der Basis des Modells, der mindestens einen Eigenschaft der flüssigen Faserpulpe, die zur Herstellung des Endprodukts verwendet wird, derart, dass sie mindestens eine gewünschte Eigenschaft des Endprodukts (406) erzeugt, wobei das Steuern ein Steuern von Komponenten vor einem Stoffauflauf der Papiermaschine umfasst, so dass die Verteilung der mindestens einen Eigenschaft der flüssigen Faserpulpe im Stoffauflauf als Funktion verschiedener Partikelgrößen derart ist, dass sie die mindestens eine gewünschte Eigenschaft des Endprodukts erzeugt.

9. Verfahren nach Anspruch 8, **gekennzeichnet durch** ein Steuern mindestens einer optischen Eigenschaft der flüssigen Faserpulpe mittels des Modells.

10. Verfahren nach Anspruch 9, **dadurch gekennzeichnet, dass** die optische Eigenschaft mindestens eine der Folgenden ist: Lichtabsorption, Lichtstreuung und Lichtdepolarisation.

11. Verfahren nach Anspruch 9 oder 10, **dadurch gekennzeichnet, dass** die optische Eigenschaft bei mindestens zwei Wellenlängen des Lichts, das zum Bestimmen der optischen Eigenschaft verwendet wird, ausgedrückt werden kann.

12. Verfahren nach einem der Ansprüche 8 bis 11, **gekennzeichnet durch** ein Steuern mindestens eines der Folgenden: des Betriebs eines Refiners, des Betriebs eines Siebs und eines rezyklierten Faserprozesses.

13. Verfahren nach einem der Ansprüche 8 bis 12, **gekennzeichnet durch** ein Steuern mindestens einer Eigenschaft der flüssigen Faserpulpe in Echtzeit.

14. Vorrichtung zur Steuerung der Qualität von Papier, Pappe oder Karton, die ein Endprodukt in Verbindung mit der Verwendung einer Papiermaschine sind,
wobei die Vorrichtung eine Steuereinheit (412) umfasst, die ausgelegt ist, Informationen über mindestens eine Eigenschaft des Endprodukts (406) zu empfangen;
die Steuereinheit (210, 412) ausgelegt ist, Informationen über ein Modell zu erfassen, das auf der Basis der Folgenden generiert wurde:

einer Verteilung mindestens einer Eigenschaft flüssiger Faserpulpe als Funktion von mindestens zwei verschiedenen Partikelgrößen, wobei ein Fraktionator unter Nutzung des hydrodynamischen Strömungswiderstands der Partikel zum Teilen der flüssigen Faserpulpe in die mindestens zwei verschiedenen Partikelgrößen verwendet wird, wobei die mindestens eine Eigenschaft aus der flüssigen Faserpulpe bestimmt wird, die in einen Stoffauflauf der Papiermaschine zu befördern ist oder in diesen gelangt ist; und
mindestens einer Eigenschaft, die aus dem Endprodukt (406) bestimmt wird;
wobei das Modell die mindestens eine Eigenschaft des Endprodukts (406) mit der Verteilung der mindestens einen Eigenschaft der Probe der flüssigen Faserpulpe, die zur Herstellung des Endprodukts (406) verwendet wird, verbindet; und

die Steuereinheit (210, 412) ausgelegt ist, auf der Basis des Modells, die mindestens eine Eigenschaft der flüssigen Faserpulpe, die zur Herstellung des Endprodukts verwendet wird, derart zu steuern, dass sie mindestens eine gewünschte Eigenschaft des Endprodukts (406) erzeugt, wobei das Steuern ein Steuern von Komponenten vor einem Stoffauflauf der Papiermaschine umfasst, so dass die Verteilung der mindestens einen Eigenschaft der flüssigen Faserpulpe im Stoffauflauf als Funktion verschiedener Partikelgrößen derart ist, dass sie die mindestens eine gewünschte Eigenschaft des Endprodukts erzeugt.

**Revendications**

1. Procédé de modélisation d'au moins une propriété d'un papier, d'un carton ou d'une carte qui est un produit final en relation avec l'utilisation d'une machine à papier, le procédé comprenant :

le prélèvement d'un échantillon (220) d'une pâte de fibres liquide utilisée pour fabriquer le produit final (206), dans lequel l'échantillon est prélevé de la pâte de fibres liquide qui doit être transportée dans une caisse d'arrivée de la machine à papier ou qui a été avancée dans celle-ci ;
l'agencement des particules de l'échantillon conformément à la taille des particules en utilisant une colonne de fractionnement utilisant la résistance à l'écoulement hydrodynamique des particules ;
la détermination, à un instant T1, d'une distribution d'au moins une propriété de l'échantillon (220) de la pâte de fibres liquide en fonction d'au moins deux tailles de particule différentes fractionnées par la colonne de fractionnement ;
la détermination, à un instant T2 qui est plus tard que l'instant T1, d'au moins une propriété du produit final (206) ;
la génération d'un modèle sur la base de ladite au moins une propriété déterminée du produit final (206) et de la distribution d'au moins une propriété de l'échantillon (220) de la pâte de fibres liquide en fonction d'au moins deux tailles de particule différentes, dans lequel le modèle relie la propriété du produit final reçue à l'instant T2 à une distribution de la propriété de l'échantillon de la pâte de fibres liquide reçue à l'instant T1 ;
le prélèvement d'un échantillon (220) de la pâte de fibres liquide utilisée pour fabriquer le produit final (206) ;
l'agencement des particules de l'échantillon conformément à la taille des particules en utilisant la colonne de fractionnement utilisant la résistance à l'écoulement hydrodynamique des particules ;
la détermination, à un instant T3 qui est plus tard que l'instant T2, d'une distribution d'au moins une propriété de l'échantillon (220) de la pâte de fibres liquide en fonction d'au moins deux tailles de particule différentes fractionnées par la colonne de fractionnement ; et
la modélisation, à un instant T4 qui est plus tard que l'instant T3, de ladite au moins une propriété du produit final (206) sur la base du modèle généré lorsque la distribution d'au moins une propriété de l'échantillon (220) à l'instant T3 est connue.

2. Procédé selon la revendication 1, **caractérisé par** la détermination d'au moins une propriété optique de l'échantillon (220) avec au moins deux tailles de particule différentes.

3. Procédé selon la revendication 2, **caractérisé en ce que** la propriété optique est au moins l'une des propriétés suivantes : l'absorption de la lumière, la dispersion de la lumière et la dépolarisation de la lumière.

4. Procédé selon l'une quelconque des revendications 2 à 3, **caractérisé par** la détermination de la propriété optique à au moins deux longueurs d'onde de la lumière utilisée pour déterminer la propriété optique.

5. Procédé selon l'une quelconque des revendications 1 à 4, **caractérisé par** la génération du modèle sur la base d'au moins un élément d'autres informations.

6. Procédé selon l'une quelconque des revendications 1 à 5, **caractérisé en ce que** le modèle est linéaire.

7. Appareil pour modéliser au moins une propriété d'un papier, d'un carton ou d'une carte qui est un produit final en relation avec l'utilisation d'une machine à papier,
dans lequel l'appareil est configuré pour prélever un échantillon (220) d'une pâte de fibres liquide utilisée pour fabriquer le produit final (206), dans lequel les moyens pour prélever un échantillon (220) sont configurés pour prélever l'échantillon de la pâte de fibres liquide qui doit être transportée dans une caisse d'arrivée de la machine à papier ou qui a été avancée dans celle-ci ; et l'appareil comprend :

une colonne de fractionnement (202) pour agencer les particules de l'échantillon conformément à la taille des particules en utilisant la résistance à l'écoulement hydrodynamique des particules ;

des moyens (210, 412) pour déterminer, à un instant T1, une distribution d'au moins une propriété de l'échantillon (220) de la pâte de fibres liquide en fonction d'au moins deux tailles de particule différentes fractionnées par la colonne de fractionnement (202), pour déterminer, à un instant T2 qui est plus tard que l'instant T1, au moins une propriété du produit final (206), et pour générer un modèle sur la base de ladite au moins une propriété déterminée du produit final (206) et de la distribution d'au moins une propriété de l'échantillon (220) de la pâte de fibres liquide en fonction d'au moins deux tailles de particule différentes, dans lequel le modèle relie la propriété du produit final reçu à l'instant T2 à une distribution de la propriété de l'échantillon de la pâte de fibres liquide reçue à l'instant T1 ; et

l'appareil est configuré pour prélever un échantillon (220) de la pâte de fibres liquide utilisée pour fabriquer le produit final (206) ;

la colonne de fractionnement (202) est configurée pour agencer les particules de l'échantillon conformément à la taille des particules en utilisant la résistance à l'écoulement hydrodynamique des particules ;

les moyens (210, 412) pour déterminer sont configurés pour déterminer, à un instant T3 qui est plus tard que l'instant T2, une distribution d'au moins une propriété de l'échantillon (220) de la pâte de fibres liquide en fonction d'au moins deux tailles de particule différentes fractionnées par la colonne de fractionnement, et modéliser, à un instant T4 qui est plus tard que l'instant T3, ladite au moins une propriété du produit final (206) sur la base du modèle généré lorsque la distribution d'au moins une propriété de l'échantillon (220) à l'instant T3 est connue.

8. Procédé de commande de la qualité d'un papier, d'un carton ou d'une carte qui est un produit final en relation avec l'utilisation d'une machine à papier ;

comprenant les étapes

de réception d'informations concernant au moins une propriété du produit final (406) ; et

d'acquisition d'informations concernant un modèle qui a été généré sur la base de ce qui suit :

une distribution d'au moins une propriété d'une pâte de fibres liquide utilisée pour fabriquer le produit final en fonction d'au moins deux tailles de particule différentes, dans lequel une colonne de fractionnement utilisant la résistance à l'écoulement hydrodynamique des particules est utilisée pour diviser la pâte de fibres liquide en au moins deux tailles de particule différentes, dans lequel ladite au moins une propriété est déterminée à partir de la pâte de fibres liquide qui doit être transportée dans une caisse d'arrivée de la machine à papier ou qui a avancée dans celle-ci ; et

au moins une propriété déterminée à partir du produit final (406),

dans lequel le modèle relie ladite au moins une propriété du produit final (406) à la distribution de ladite au moins une propriété de l'échantillon de la pâte de fibres liquide utilisée pour la fabrication du produit final (406) ; et

de commande, sur la base du modèle, de ladite au moins une propriété de la pâte de fibres liquide, qui est utilisée pour fabriquer le produit final, de sorte qu'elle soit telle qu'elle produise au moins une propriété souhaitée du produit final (406), dans lequel la commande comprend la commande des composants avant une caisse d'arrivée de la machine à papier de sorte que la distribution de ladite au moins une propriété de la pâte de fibres liquide dans la caisse d'arrivée en fonction des différentes tailles de particule soit telle qu'elle produise ladite au moins une propriété souhaitée du produit final.

9. Procédé selon la revendication 8, **caractérisé par** la commande d'au moins une propriété optique de la pâte de fibres liquide au moyen du modèle.

10. Procédé selon la revendication 9, **caractérisé en ce que** la propriété optique est au moins l'une des propriétés suivantes : l'absorption de la lumière, la dispersion de la lumière et la dépolarisation de la lumière.

11. Procédé selon la revendication 9 ou 10, **caractérisé en ce que** la propriété optique peut être exprimée à au moins deux longueurs d'onde de la lumière utilisée pour déterminer la propriété optique.

12. Procédé selon l'une quelconque des revendications 8 à 11, **caractérisé par** la commande d'au moins l'un des éléments suivants : le fonctionnement d'un affineur, le fonctionnement d'un tamis et un traitement fibres recyclées.

13. Procédé selon l'une quelconque des revendications 8 à 12, **caractérisé par** la commande d'au moins une propriété de la pâte de fibres liquide en temps réel.

14. Appareil pour commander la qualité d'un papier, d'un carton ou d'une carte qui est un produit final en relation avec l'utilisation d'une machine à papier,

dans lequel l'appareil comprend un contrôleur (412) configuré pour recevoir des informations concernant au moins une propriété du produit final (406) ;
le contrôleur (210, 412) est configuré pour acquérir des informations concernant un modèle qui a été généré sur la base de ce qui suit :

une distribution d'au moins une propriété d'une pâte de fibres liquide en fonction d'au moins deux tailles de particule différentes, dans lequel une colonne de fractionnement utilisant la résistance à l'écoulement hydrodynamique des particules est utilisée pour la division de la pâte de fibres liquide en lesdites au moins deux tailles de particule différentes, dans lequel ladite au moins une propriété est déterminée à partir de la pâte de fibres liquide qui doit être transportée dans une caisse d'arrivée de la machine à papier ou qui a été avancée dans celle-ci ; et
au moins une propriété déterminée à partir du produit final (406),
dans lequel le modèle relie ladite au moins une propriété du produit final (406) à la distribution de ladite au moins une propriété de l'échantillon de la pâte de fibres liquide utilisée pour la fabrication du produit final (406) ; et

le contrôleur (210, 412) est configuré pour commander, sur la base du modèle, ladite au moins une propriété de la pâte de fibres liquide, qui est utilisée pour fabriquer le produit final, de sorte qu'elle soit telle qu'elle produise au moins une propriété souhaitée du produit final (406), dans lequel la commande comprend la commande des composants avant une caisse d'arrivée de la machine à papier de sorte que la distribution de ladite au moins une propriété de la pâte de fibres liquide dans la caisse d'arrivée en fonction des différentes tailles de particule soit telle qu'elle produise ladite au moins une propriété souhaitée du produit final.

FIG. 1

FIG. 2

FIG. 3

FIG. 4

FIG. 5

FIG. 6

**EP 2 417 497 B1**

**REFERENCES CITED IN THE DESCRIPTION**

**Patent documents cited in the description**

- WO 9832916 A
- EP 1023648 A
- US 7082348 B
- US 5087823 A
- US 4318180 A
- WO 2007122289 A